# EUROPEAN PATENT APPLICATION

(11) **EP 4 385 845 A1**
(43) Date of publication of application: **19.06.2024**
(21) Application number: 22213429.8
(22) Date of filing: 14.12.2022
(51) Int. Cl.: B60W 30/182, B60W 30/02, B60W 30/045, B60W 50/029, B60W 50/035, B60W 50/038, B60W 60/00, B60T 1/16, B62D 37/02, B60W 10/04, B60W 10/22, B60W 10/18, B60W 10/20

(54) **VEHICLE WITH DRIVING MODES CONTROL AND MANAGEMENT SYSTEM**

(71) Applicant: Bugatti Rimac D.o.o., 10431 Sveta Nedelja (HR)
(72) Inventor: Sostaric, David, 40000 Cakovec (HR); Maric, Rok, 9240 Ljutomer (SI); van Pelt, Timotheus, 3054cl Rotterdam (NL); Simunic, Tomislav, 10298 Gornja Bistra (HR)
(74) Representative: Tarabbia, Luigi

(57) **Abstract**

A vehicle comprises management and control means associated to onboard systems and/or to a driving input interface and/or to the engine and/or powertrain and/or to at least one wheel and/or to the chassis, such management and control means being capable of: determining a multiplicity of aggregated command outputs, each of said aggregated command outputs comprising command parameters and defining an overall vehicle configuration status/mode; detecting one or more dynamic parameters relating to a vehicle movement and/or overall status and/or condition; and selectively prioritize each of said aggregated command outputs conditionally on the fact that one or more of said dynamic parameters are exceeding a threshold and/or a minimum or maximum safety value, the vehicle command parameters being changed according to said prioritization of said aggregated command outputs.

## Description

The present invention is related to a vehicle, e.g., an automobile or any other kind of means of transportation, having one or more "onboard systems" devoted to various driving government and/or performance provisions, and being functionally linked to suitable management and control means dedicated to the implementation of the harmonization of the operative conditions of such onboard systems.

It is known in the art that modern vehicles can be "configured" in various driving (or riding) modes in order to better cope with environmental conditions (rough or low grip travelling surfaces, extreme temperatures and so on) or to express a predetermined level of dynamic performance (maximum energetic efficiency, maximum longitudinal speed, improved handling in a twisty road and so on): in order to define such driving modes, which are usually inputted by the vehicle user/driver, the onboard electronics provide for a suitable number of command parameters to be sent to one or more onboard vehicle systems (powertrain, gearbox, suspension, energy charge and storage system and so on) in order to set their working conditions according to the parameters and to the user/driver selection of a given driving mode.

Usually, after a given driving mode is selected and implemented on a vehicle, the configurations of the various onboard systems affected by that selection are steadily kept over time, and eventually a default driving mode can be restored only after a vehicle shutdown and subsequent start-up (even if in some cases, a given selected driving mode is kept as "default" even after shutdown and re-start of the vehicle itself), while eventual safety systems like ABS or ESC continue their monitoring (and, if required, correcting/intervening) routine in parallel to the driving mode selector: otherwise stated, the dynamic safety controls of a typical known art vehicle do not change the selected driving mode without consent of the user/driver.

The aforementioned prior art, despite being largely spread in the automotive sector, has some non-negligible advantages, in particular in association with electrically-powered vehicles (EVs) and even more in detail when it comes to optimization of the vast array of onboard systems of high- (or very-high) performance cars.

Actually, high-performance EVs are usually characterized by a performance envelope wherein a huge amount of power and torque is available and, being capable to produce such huge amounts of power and torque demanded by one or more electric motors, wherein a large battery pack (with high capacity and corresponding high capability of charge and/or discharge current/power) is installed onboard: the peculiar combination of the performance envelope and of all the onboard systems requested for the optimal management of the power, torque and current/power charge and discharge makes such a kind of vehicle much more critical in terms of correct avoidance of potentially catastrophic failures while at the same time granting actual access to the very high performances of the vehicle itself (e.g. top speeds well above 300 km/h or turning capabilities that allow for centrifugal accelerations of 2 g and even more).

In such a combination of factors, the intrinsic separation between the activity of the dynamic safety system/features such as ABS, ESC or TCS and the driving mode selection may lead to critical situations which develop in very short times and which may lead to critical failures, e.g., related to a sudden overheating of the battery pack (due for example to a request for sudden acceleration or sustained very high speed, or even due to a large "spike" of recharging current coming to the battery as a consequence of a regenerative braking action starting from a very high speed) or related to loss of control of the vehicle during very high speed manoeuvres as a consequence of "incompatibility" of a selected driving mode with the feedback of one or more vehicle's systems which is "forced" and kept fixed by the driving mode (fixed!) selection.

Having stated the prior art drawbacks, it's therefore an object of the present invention to provide a vehicle and a related "integrated control and management system", such a system being suitably comprised with management and control means which can overcome the aforementioned drawbacks, and which is mainly capable of achieving an autonomous (or an intrinsic-safety or fail-safe) logic in order to both cope with one or more user/driver defined selection of driving modes and to ensure a highly optimized management of the vehicle and of all of its systems in order to preserve them from failures while at the same time maintaining the maximum performance output possible and granting a safe level of dynamic control so as to avoid crashes or non-recoverable driving errors (for example, driving errors consisting in unsuitable inputs coming from the user/driver).

At the same time, the present invention aims to provide a so-called driving modes prioritization system, and therefore to a vehicle having such a driving modes prioritization system, which is capable of intervening on very different onboard systems (provided that they have the capability of being configured "in real time" in one or more of their operating parameters) while remaining fully compatible with the known onboard networks dedicated to the data flow and/or exchange such as the so-called CAN-bus or the like.

These aims, along with other technical advantages, will be illustrated and achieved by a driving modes prioritization system according to the present invention as described and claimed hereinafter.

The driving modes prioritization system according to the invention is structurally and functionally integrated in a vehicle, and such vehicle basically comprises the following hardware components:
- a chassis hosting a given number of wheels (e.g., four wheels for a "traditional" car), wherein at least one of such wheels is a driving wheel and wherein at least one of these wheels is a maneuvering (or "steering" or even "steerable") wheel;
- at least one engine (e.g., a conventional endothermal engine or an electric engine) or a so-called "powertrain" located in the chassis and linked to the aforecited at least driving wheel and/or to a driving axle comprising at least two driving wheels;
- a plurality of "onboard systems" dedicated to motion control of the vehicle and/or to determine or affect dynamic parameters of the vehicle during its movement (examples of such onboard systems may not limitedly encompass steering racks, suspensions, active aerodynamics located in various body parts of the vehicle and so on); and
- a "driving input interface", including (but not limited to) a steering wheel and a set of driving pedals and/or levers and/or suitably ergonomically-shaped tools (such as handbrakes, brake bias selectors/regulators and so on) interfaceable with a user/driver of the vehicle or with an autonomous guidance system.

Advantageously, the driving modes prioritization system according to the invention also comprises management and control means (which can be complementarily constituted by hardware and/or software components) associated to one or more the aforecited onboard systems and/or to the driving input interface and/or to the one or more engines and/or powertrain and/or to at least one wheel and/or to the chassis intended herein, in the wording of the invention, as the "base platform" whereupon all the aforecited onboard systems are mounted.

Such management and control means are capable of performing the following functions:
- determining a multiplicity of so-called "aggregated command outputs", wherein one of such aggregated command outputs comprising one or more command parameters and defining an overall vehicle configuration status/mode;
- detecting one or more dynamic parameters relating to a vehicle movement and/or overall status and/or condition; and
- selectively prioritize each of the aggregated command outputs conditionally on the fact that one or more of the detected dynamic parameters are exceeding a threshold and/or a minimum or a maximum safety value, in a way that the vehicle command parameters undergo a substantial change according to the just cited prioritization of the aggregated command outputs.

Otherwise stated, the management and control means are "self-organized", from a computational capability standpoint, to recognize a whole range of different driving modes (each of this driving modes is made up by a suitable set of command parameters which are sent as "inputs" to the various onboard systems by choice of the user/driver of the vehicle itself) and to give a preference - or a more aptly defined "priority" - order to such a range of driving modes, and they are also adapted/capable to bypass the user/driver choices if they find that a given driving mode is incompatible (or generates insufficient qualitative and quantitative driving correction feedback) with a given situation occurring to the vehicle (e.g., overheating of the battery pack, excessive recharging of the battery pack, approaching to a bend/corner with a low downforce but with an excessive speed and so on).

Otherwise stated, the management and control means according to the invention can give autonomously to the vehicle an "ideal" driving mode which enables all the onboard systems - and the dynamic safety controls such as the ABS or the ESC, as well - to work with minimum reaction time and maximum precision of intervention.

It is also to be observed that the management and control means according to the invention can be set up in order to have a "fixed" order of prioritization for a given range of driving modes, and this fixed order can be implemented (e.g., by way of suitable software or firmware programming) according to a given logic which for example can be the maximization of the battery pack efficiency or the minimization of harmful heat generation (or, as a further example, the maximization of the driver and passenger protection in terms of possible impacts and/or inertial decelerations imparted to their bodies), or such prioritization order can be dynamically variable as a function of one or more "environmental" and/or "driving dynamics" measurements: in this possible - yet not limiting - embodiment, the management and control means may also comprise, mainly from a software standpoint, specific sub-routines or programs which determine and/or vary the order of preference/prioritization of the driving modes available to the user/driver of the vehicle.

Delving deeper into details, it can be observed that the aggregated command outputs are capable of determining, typically (but not limitedly to) in a decreasing priority value sequence, one and/or more of the following vehicle driving modes (or "driving stati" according to the wording used in the present invention):
- a "failure" status/mode wherein one or more the dynamic parameters are exceeding, above or below, a respective safety threshold value (in this failure status/mode the aggregated command outputs are adapted to bring the vehicle to a dynamic condition of maximum stability and/or minimum or zero acceleration and/or minimum or zero travelling speed and/or minimum or zero torque (or power) output and/or minimum heat generation);
- an "airbrake" status/mode wherein at least a vehicle speed is equal to or greater than a given threshold speed and/or wherein the vehicle is temporarily adapted to generate a higher aerodynamic drag and aerodynamic downforce (such an aerodynamic drag can be considered as an "overall" aerodynamic drag generated diffusely on the entire vehicle body or it can be considered exclusively to be a "front" aerodynamic drag, on a front axle of the vehicle, or a "rear" aerodynamic drag on a rear axle of the vehicle) within a predetermined amount of time and with respect to a status/mode from which the vehicle itself is temporarily re-configured;
- a "thermal control" status/mode wherein at least a temperature of a vehicle component (e.g., a battery pack temperature and/or an inverter temperature and/or a motor temperature and/or a service fluid temperature and/or a gearbox temperature) is equal to or lesser than greater than a respective threshold value;

- a "high speed status/mode" wherein the vehicle is adapted to generate a lowest - or minimum - aerodynamic drag (as already stated before, the lowest aerodynamic drag can be considered as generated by the whole vehicle body or it can just be considered as a front aerodynamic drag or a rear aerodynamic drag) while the downforce is being mutually balanced on a front axle of the vehicle and on a rear axle of the vehicle, and/or to reach its maximum practical speed;
- a "DRS status/mode" wherein the vehicle is temporarily adapted to generate a lower overall aerodynamic drag (such a lower and temporary aerodynamic drag can be considered as being a front aerodynamic drag and/or a rear aerodynamic drag) within a predetermined amount of time and with respect to a status/mode from which the vehicle itself is temporarily re-configured;
- a "stability" status/mode wherein the command parameters are set in order to minimize a vehicle reaction or dynamic feedback to a disturbance generated by an environment in which the vehicle is moving and/or caused by a user/driver (e.g., a bump or cavity in the ground on which the vehicle is running, or a sudden variation of the friction factor of such driving ground, or sudden oversteer by the driver);
- an "efficiency" status/mode wherein the command parameters are set in order to maximize a vehicle's range and/or to minimize a consumption of a vehicle's energy source or accumulating unit;
- a "cruise" user/driver defined status/mode wherein the command parameters are set in order to set and/or maintain a vehicle's cruise speed;
- a "maximum maneuvering" mode wherein the command parameters are set in order to maximize a responsiveness of the vehicle to the user/driver's inputs and/or wherein a mechanical grip between at least one wheel and a surface run over by the vehicle during its movement is maximized and/or wherein a rotational speed around at least one axis of said vehicle is maximized (such an axis can for example be a yaw axis) and/or wherein a maximum aerodynamic downforce is acting on the vehicle during its movement;
- a "drift" user/driver defined status/mode wherein the command parameters are set in order to determine and/or maintain a controlled sliding of a rear axle and/or a front axle of the vehicle;
- an "autonomous drive" status/mode wherein the aggregated command outputs are determined by said autonomous guidance system (and typically in cooperation with the management and control means);
- a "custom" user/driver defined status/mode wherein one or more, and preferably all of said command parameters are selectively determined by user/driver's inputs; and
- a "track and/or racetrack" user/driver defined status/mode wherein the command parameters are set in order to maximize a vehicle's dynamic performance along a given path or circuit (for example, such a track and/or racetrack status/mode can be defined as a parametric combination of one or more of the preceding stati/modes).

In order to get a complete capability of detection of the vehicle conditions and running set-up, said dynamic parameters used as inputs for calculation /determination of the priority-based selection of the most suitable driving mode comprising:
- a longitudinal speed of the vehicle;
- a rotational speed or rotational acceleration of at least a wheel of the vehicle;
- a difference between rotational speeds or rotational accelerations of at least two wheels of the vehicle (in a possible embodiment of the invention, the just cited two wheels may belong to a front axle or to a rear axle of the vehicle);
- a steering angle of (at least) a wheel of the vehicle;
- a steering angle command input imparted by a user of the vehicle (this steering angle may be coincident or a fraction of the steering angle of the wheel, e.g., depending on the reduction ratio of the steering rack of the vehicle);
- a static or a dynamic toe angle of at least a wheel of the vehicle;
- a static or a dynamic camber angle of at least a wheel of the vehicle;
- a static or a dynamic caster angle of at least a wheel of the vehicle;
- a static or a dynamic Ackermann angle of at least a wheel of the vehicle (in an embodiment of the present invention, the just cited static or dynamic Ackermann angle is typically estimated at a steering wheel of the vehicle);
- a pressure and/or a temperature of a tire mounted on a wheel of the vehicle;
- an operating index of at least a suspension linked to a wheel of the vehicle (for the sake of the present invention, with the expression "operating index" it is to be meant a value of elastic load or preload of said suspension and/or a value of hydraulic/viscous resistance in compression or rebound direction of travel of the same suspension);
- a ride height of the vehicle with respect to the ground (such ride height can be defined as an average ride height of the vehicle chassis with respect to the ground);
- an output power and/or an output torque and/or a number of revolutions per minute of at least an engine and/or an electric motor and/or a powertrain of the vehicle;
- a real-time front height and/or a real-time rear height;
- a real-time travelling speed of the vehicle;
- a longitudinal acceleration or deceleration of the vehicle in a travelling direction and/or along the longitudinal axis (2a);
- a steering angle output resulting at front wheels of said vehicle;
- a steering angle input resulting at a steering command of said vehicle;
- a temperature of a vehicle component (such a vehicle component temperature may exemplificatively be a battery pack temperature and/or
an inverter temperature and/or a motor temperature and/or a service fluid temperature and/or a gearbox temperature of the vehicle);
- a rotational speed of the vehicle around a pitch axis;
- a rotational acceleration of the vehicle around the just cited pitch axis;
- a (typically, but not limitedly to) linear variation ratio, over time, of the front height (2b) and/or of the rear height (2c) along a pitching direction substantially perpendicular with respect to the travelling ground on which the vehicle is running;
- a longitudinal acceleration of the front height (2b) and/or of the rear height (2c) along the just cited pitching direction; and
- an input command given by a user of the vehicle to the driving input interface.

Focusing on the driving input interface, it can be seen that for the fulfilment of the technical aims of the invention this hardware component of the vehicle may comprise at least one or more of the following parts:
- a steering command;
- at least an accelerator pedal and/or a brake pedal;
- a gearbox selector;
- a driving mode selector;
- a ride height selector;
- a suspension setting selector; and
- an aerodynamic status or mode selector;
- a power level selector and/or a torque level selector; and
- a regenerative and/or hybrid powertrain mode selector.

According to the invention, the driving input interface may also comprise suitable controls dedicated to other "non-vital" systems of the vehicle (such as the radio/media apparatus or the ventilation/conditioning circuit for the vehicle passenger bay): in this case, and according to the potential impact of these non-vital systems on the safety of the vehicle and/or on the availability of the full performance spectrum of the vehicle, the management and control means according to the invention may also act autonomously on the non-vital systems themselves, e.g., by reducing the amount of music generated in the vehicle's cabin (in order to increase the user/driver's attention or in order to minimize energy drain from the battery pack) or by enhancing the function of battery pack cooling/conditioning or, as a further example, by maximizing the brake cooling capability by suitable diversion of airflow towards the braking apparati.

According to a further aspect of the invention, the management and control means are also adapted to determine and/or selectively prioritize, as a function of one or more of the hereabove presented dynamic parameters, at least the following further vehicle stati/modes:
- a maximum longitudinal stability status/mode wherein vehicle variations of spatial configuration around its yaw and/or pitch axis are minimized or nullified;
- a maximum lateral stability status/mode wherein vehicle variations of spatial configuration around its roll axis are minimized or nullified;
- a minimum understeer status/mode wherein vehicle mechanical grip and/or aerodynamic downforce enhanced grip at its front end are maximized;
- a minimum oversteer status/mode wherein vehicle mechanical grip and/or aerodynamic downforce enhanced grip at its rear end are maximized;
- a minimum ride height status/mode wherein one or more of the vehicle ride heights, with respect to said number of points of the underbody, are maintained at a minimum value; and
- a maximum ride height status/mode wherein one or more of the vehicle ride heights, with respect to said number of points of the underbody, are maintained at a maximum value.

Otherwise stated, the present invention can provide for an even deeper integration (both from the hardware standpoint and from the software/firmware standpoint) between traditional stability control means (ABS, TCS, torque vectoring systems, ESC and so on) and the management and control means, in order to gain a substantial reduction in reaction time for such stability control means to intervene and to provide for a smoother and more efficient intervention as well.

Switching now to hardware components, it must be observed that the onboard systems typically can comprise at least one or more of the following features:
- a front end height and/or a rear end height controller (which may be for example electrically motorized or hydraulically/pneumatically powered, and which are adapted to set at least at a front height and/or a rear height of the vehicle with respect to a travelling ground in a condition of travel at a given constant speed of the chassis);
- a suspension system, which conveniently may be an "active type" suspension system adapted to define a vehicle setup (and such setup may typically comprise one or more preload values of spring elements associated with each wheel and one or more hydraulic or viscous damping forces acting on each wheel, and in case it may also comprise one or more defining parameters for any suspension component like, for example, sway bars or anti-roll bars);
- a steering system adapted to define a steering direction of at least one wheel (and typically, of at least one steering axle in a so-called "2WS" vehicle or even of at least two steering axles in a so-called "4WS" vehicle);
- an engine and/or powertrain management system adapted to define at least a revving range and/or a torque and/or power and/or regenerative capability of said engine and/or powertrain (or more in general, any other parameter associated with the power/torque output of such an engine and/or powertrain management system); and
- an aerodynamic force generator, which is conveniently adapted to define a lift and drag force distribution on the vehicle.

Looking more closely at the just cited aerodynamic force generator, a possible embodiment of the invention may comprise at least one or more of the following features:
- a so-called "front aero assembly" associated to and active in proximity and/or in correspondence of a front end of the vehicle and adapted to generate a front aerodynamic force;
- a so-called "rear aero assembly" associated to and active in proximity and/or in correspondence of a rear end of the vehicle and adapted to generate a rear aerodynamic force; and
- at least one, and preferably two so-called "side aero assemblies" associated to and active in proximity and/or in correspondence of at least one side, and preferably to each side of the vehicle and respectively adapted to generate side aerodynamic forces (such side aerodynamic forces can be generated independently for each side of the vehicle, for example, if an extra amount of downforce is required to be applied just onto the wheels of one side of the vehicle, e.g., during a high speed drifting maneuver or during a prolonged long "sweeper" corner wherein a lateral balancing of the vehicle is required).

In order to give the driving modes prioritization system the most complete and accurate capability of detection (which is crucial for the right assessment of the ideal driving mode preference), the management and control means comprise:
- sensor means adapted to measure one or more of the previously cited dynamic parameters;
- an elaborating unit adapted to receive as an input the dynamic parameters and capable of calculating and emitting a command output towards at least one, and preferably to all onboard systems; and
- actuator means operatively acting on at least one, and preferably on all the onboard systems and being adapted to receive the just cited command output.

The "command output" as hereabove expressed is intended to be, according to the invention, as a "single" output directed towards a correspondingly single onboard system or as a group of outputs directed simultaneously (or sequentially) to different onboard systems, and the number of parameters ideally contained in each command output can be varying from just one to a given number, depending on the overall number of parameters that can be received by each onboard systems receiving the command output itself.

The just cited actuators, and by extension of the main functional concept of the invention, also the management and control means can conveniently be adapted to reversibly configure at least one, and preferably all the onboard systems; such a reversible configuration may occur (at least) between a first condition, which is related to a first set of system-specific command parameters, and a second condition which is related to a second set of system-specific command parameters (of course, the second set of system-specific command parameters is different from the first set of system-specific command parameters). Advantageously, the just introduced reversibility of the order of preference/priority given to the various driving modes available to the user/driver can be used in order to give the vehicle the capability of returning spontaneously to the driving mode set out voluntarily by the user/driver as soon as the conditions which have determined its abandonment (e.g., in favor of a safer driving mode) have ceased to exist: for example, the vehicle may return to its user-defined "high speed mode" as soon as a sudden transverse gust of wind has ceased to exert its effects (in this case, the driving modes prioritization system, having detected the wind gust, may have autonomously set a "maximum stability" driving mode notwithstanding the user/driver defined setting, which is definitely not advisable in terms of risking a high-speed loss of control of the vehicle).

According to another aspect of the invention and delving once again deeper into details, the management and control means are capable of calculating and emitting a command output comprising (in an exemplificative yet not limiting way) at least one or more of the following command parameters:
- an adjustment angle;
- a displacement and/or translation and/or a rotation;
- a geometric and/or spatial configuration;
- a value of resistance force;
- a value of aiding force;
- a value of energy consumption and/or absorption; and
- a value of energy release and/or output and/or vehicle travelling speed. Conveniently, at least one and preferably all of the just cited command parameters are associable to said onboard systems.

The described and claimed invention achieves the aforecited technical aims and surpasses the shortcomings of the prior art hereabove mentioned, starting but not being limited to the advantage consisting in a very high degree of "zero-time" adjustment of the overall configuration of the vehicle as a function of any anomaly or any potential harm deriving from the environment or from the driver's input: such adjustment is not only involving the intervention of safety controls but can be even predictive, re-setting a more suitable driving mode in a completely autonomous way and therefore bringing one or more onboard vehicle systems into a working condition wherein they can prevent or deal more efficiently with the anomaly itself.

Besides, the overall structural architecture of the herein described and claimed system allows for a high level of reliability and compatibility in the data/inputs/outputs exchange throughout the vehicle's inboard network, giving rise to an inherent level of implementability with respect to known-type hardware (like CAN-bus or the like).

Furthermore, the overall structure of the present invention can be implemented in various embodiments in order to cope with various ranges of torque outputs, maximum rotations per minute values and whatever else operating parameter which may characterize a vehicle with a single (electric or "ICE") motor or more than one of (electric and/or "ICE") motors, and giving a performance envelope of any kind ranging from "daily drivers" to "hypercars".

Last but not least, the driving mode prioritization system according to the present invention can also be implemented in any other embodiment enclosed in its inventive concept as claimed, also by way of collateral modifications available to a skilled technician in the technical sector of pertinence of the invention itself, and thus maintaining the functional achievements of the invention along with practicality of production, usage, assembly and maintenance.

## Claims

1. a vehicle comprising:
- a chassis hosting a predetermined number of wheels, at least one of said wheels being a driving wheel and at least one of said wheels being a maneuvering wheel;
- at least one engine or powertrain located in said chassis and linked to said at least driving wheel and/or to a driving axle comprising at least two driving wheels;
- a plurality of onboard systems dedicated to motion control of the vehicle and/or to determine or affect dynamic parameters of the vehicle during its movement; and
- a driving input interface interfaceable with a user of said vehicle or with an autonomous guidance system,
**Characterized in that** it further comprises management and control means, said management and control means being associated to said onboard systems and/or to said driving input interface and/or to said at least one engine and/or powertrain and/or to at least said one wheel and/or to said chassis and being capable of:
- determining a multiplicity of aggregated command outputs, each of said aggregated command outputs comprising one or more command parameters and defining an overall vehicle configuration status/mode;
- detecting one or more dynamic parameters relating to a vehicle movement and/or overall status and/or condition; and
- selectively prioritize each of said aggregated command outputs conditionally on the fact that one or more of said dynamic parameters are exceeding a threshold and/or minimum safety value, the vehicle command parameters being changed according to said prioritization of said aggregated command outputs.

2. a vehicle as in claim 1, wherein said aggregated command outputs are capable of determining, preferably in a decreasing priority value sequence, one and/or more of the following vehicle stati/modes:
- a "failure" status/mode wherein one or more the dynamic parameters are exceeding, and preferably are above or below, a respective safety threshold value and wherein said aggregated command outputs are adapted to bring the vehicle to a dynamic condition of maximum stability and/or minimum or zero acceleration and/or minimum or zero travelling speed and/or minimum or zero torque output and/or minimum heat generation;
- an "airbrake" status/mode wherein at least a vehicle speed is equal to or greater than a given threshold speed and/or wherein the vehicle is temporarily adapted to generate a higher aerodynamic drag and aerodynamic downforce, said aerodynamic drag preferably being an overall aerodynamic drag or a front aerodynamic drag on a front axle of the vehicle or a rear aerodynamic drag on a rear axle of the vehicle, within a predetermined amount of time and with respect to a status/mode from which the vehicle itself is temporarily re-configured;
- a "thermal control" status/mode wherein at least a temperature of a vehicle component, said vehicle component temperature being preferably a battery pack temperature and/or an inverter temperature and/or a motor temperature and/or a service fluid temperature and/or a gearbox temperature, is equal to or lesser than or greater than a respective threshold value;
- a "high speed status/mode" wherein the vehicle is adapted to generate a lowest aerodynamic drag, said lowest aerodynamic drag preferably comprising a front aerodynamic drag and a rear aerodynamic drag while the downforce is being mutually balanced on a front axle of the vehicle and on a rear axle of the vehicle, and/or to reach its maximum practical speed;
- a "DRS status/mode" wherein the vehicle is temporarily adapted to generate a lower overall aerodynamic drag, said lower and temporary aerodynamic drag preferably comprising a front aerodynamic drag and a rear aerodynamic drag while the downforce is being mutually balanced on a front axle of the vehicle and on a rear axle of the vehicle, within a predetermined amount of time and with respect to a status/mode from which the vehicle itself is temporarily re-configured;
- a "stability" status/mode wherein the command parameters are set in order to minimize a vehicle reaction or dynamic feedback to a disturbance generated by an environment in which the vehicle is moving and/or generated by a user/driver;
- an "efficiency" status/mode wherein the command parameters are set in order to maximize a vehicle's range and/or to minimize a consumption of a vehicle's energy source or accumulating unit;
- a "cruise" user/driver defined status/mode wherein the command parameters are set in order to set and/or maintain a vehicle's cruise speed;
- a "maximum maneuvering" mode wherein the command parameters are set in order to maximize a responsiveness of the vehicle to the user/driver's inputs and/or wherein a mechanical grip between at least one wheel and a surface run over by said vehicle during its movement is maximized and/or wherein a rotational speed around at least one axis of said vehicle is maximized, said axis being even more preferably a yaw axis and/or wherein a maximum aerodynamic downforce is acting on the vehicle during its movement;
- a "drift" user/driver defined status/mode wherein the command parameters are set in order to determine and/or maintain a controlled sliding of a rear axle and/or a front axle of the vehicle;
- an "autonomous drive" status/mode wherein said aggregated command outputs are determined by said autonomous guidance system and preferably in cooperation with said management and control means;
- a "custom" user/driver defined status/mode wherein one or more, and preferably all of said command parameters are selectively determined by user/driver's inputs; and
- a "track and/or racetrack" user/driver defined status/mode wherein the command parameters are set in order to maximize a vehicle's dynamic performance along a given path or circuit, said "track and/or racetrack" status/mode being preferably defined as a parametric combination of one or more of the preceding stati/modes.

3. a vehicle as in claims 1 or 2, wherein said dynamic parameters comprise:
- a longitudinal speed of the vehicle;
- a rotational speed or rotational acceleration of at least a wheel of the vehicle;
- a difference between rotational speeds or rotational accelerations of at least two wheels of the vehicle, said two wheels preferably belonging to a front axle or to a rear axle of the vehicle;
- a steering angle of at least a wheel of the vehicle;
- a steering angle command input imparted by a user of the vehicle;
- a static or a dynamic toe angle of at least a wheel of the vehicle;
- a static or a dynamic camber angle of at least a wheel of the vehicle;
- a static or a dynamic caster angle of at least a wheel of the vehicle;
- a static or a dynamic Ackermann angle of at least a wheel of the vehicle, said static or dynamic Ackermann angle being preferably measured at a steering wheel of the vehicle;
- a pressure of a tire mounted on a wheel of the vehicle;
- an operating index of at least a suspension linked to a wheel of the vehicle, said operating index comprising preferably a value of elastic load or preload of said suspension and/or a value of hydraulic/viscous resistance in compression or rebound direction of travel of said suspension;
- a ride height of the vehicle with respect to the ground;
- an output power and/or an output torque and/or a number of revolutions per minute of at least an engine and/or an electric motor and/or a powertrain of the vehicle;
- a real-time front height (2b) and/or a real-time rear height (2c);
- a real-time travelling speed of the vehicle;
- a longitudinal acceleration or deceleration of the vehicle in a travelling direction and/or along the longitudinal axis (2a);
- a steering angle output resulting at front wheels of said vehicle;
- a steering angle input resulting at a steering command of said vehicle;
- a temperature of a vehicle component, said vehicle component temperature being preferably a battery pack temperature and/or an inverter temperature and/or a motor temperature and/or a service fluid temperature and/or a gearbox temperature of said vehicle;
- a rotational speed of the vehicle around a pitch axis;
- a rotational acceleration of the vehicle around said pitch axis;
- a linear variation ratio, over time, of the front height (2b) and/or of the rear height (2c) along a pitching direction substantially perpendicular with respect to said travelling ground;
- a longitudinal acceleration of the front height (2b) and/or of the rear height (2c) along said pitching direction; and
- an input command given by a user of the vehicle to said driving input interface.

4. a vehicle as in any one of the preceding claims, wherein said driving input interface comprises at least one or more of the following:
- a steering command;
- at least an accelerator pedal and/or a brake pedal;
- a gearbox selector;
- a driving mode selector;
- a ride height selector;
- a suspension setting selector; and
- an aerodynamic status or mode selector;
- a power level selector and/or a torque level selector and
- a regenerative and/or hybrid powertrain mode selector.

5. a vehicle as in any one of the preceding claims, wherein the management and control means are also adapted to determine and/or selectively prioritize, as a function of said dynamic parameters, at least the following further vehicle stati/modes:
- a maximum longitudinal stability status/mode wherein vehicle variations of spatial configuration around its yaw and/ pitch axis are minimized or nullified;
- a maximum lateral stability status/mode wherein vehicle variations of spatial configuration around its roll axis are minimized or nullified;
- a minimum understeer status/mode wherein vehicle mechanical and/or aerodynamic grip at its front end are maximized;
- a minimum oversteer status/mode wherein vehicle mechanical and/or aerodynamic grip at its rear end are maximized;
- a minimum ride height status/mode wherein one or more of said vehicle ride heights, with respect to said number of points of the underbody, are maintained at a minimum value; and
- a maximum ride height status/mode wherein one or more of said vehicle ride heights, with respect to said number of points of the underbody, are maintained at a maximum value.

6. a vehicle as in any one of the preceding claims, wherein said onboard systems comprise at least one or more of the following:
- a front end height and/or a rear end height controller adapted to set at least at a front height and/or a rear height of the vehicle with respect to a travelling ground in a condition of travel at a given constant speed of said chassis;
- a suspension system, preferably an "active type" suspension system adapted to define a vehicle setup comprising one or more preload values of spring elements associated to each wheel and one or more hydraulic or viscous damping forces acting on each wheel;
- a steering system adapted to define a steering direction of at least one wheel and preferably of at least one steering axle and even more preferably of at least two steering axles of the vehicle;
- an engine and/or powertrain management system adapted to define at least a revving range and/or a torque and/or power and/or regenerative capability of said engine and/or powertrain; and
- an aerodynamic force generator adapted to define a lift and drag force distribution on the vehicle.

7. a vehicle as in claim 6, wherein said aerodynamic force generator comprises at least one or more of the following:
- a front aero assembly associated to and active in proximity and/or in correspondence of a front end of the vehicle and adapted to generate a front aerodynamic force;
- a rear aero assembly associated to and active in proximity and/or in correspondence of a rear end of the vehicle and adapted to generate a rear aerodynamic force; and
- at least one, and preferably two side aero assemblies associated to and active in proximity and/or in correspondence of at least one side, and preferably to each sides of the vehicle and respectively adapted to generate side aerodynamic forces, said side aerodynamic forces being even more preferably generated independently for each side of the vehicle.

8. a vehicle as in any one of the preceding claims, wherein said management and control means comprise:
- sensor means adapted to measure one or more of said dynamic parameters;
- an elaborating unit adapted to receive as an input said dynamic parameters and capable of calculating and emitting a command output towards at least one, and preferably to all said onboard systems; and
- actuators operatively acting on least one, and preferably on all said onboard systems and being adapted to receive said command output.

9. a vehicle as in claim 8, wherein at least said actuators, and preferably the management and control means, are adapted to reversibly configure at least one, and preferably all the onboard systems at least between a first condition related to a first set of system-specific command parameters and a second condition related to a second set of system-specific command parameters, said second set of system-specific command parameters being different from said first set of system-specific command parameters.

10. a vehicle as in any one of the preceding claims, wherein the management and control means are capable of calculating and emitting a command output comprising at least one or more of the following command parameters:
- an adjustment angle;
- a displacement and/or translation and/or a rotation;
- a geometric and/or spatial configuration;
- a value of resistance force;
- a value of aiding force;
- a value of energy consumption and/or absorption; and
- a value of energy release and/or output and/or vehicle travelling speed,
At least one and preferably all of said command parameters being associable to said onboard systems.
